# NEW EUROPEAN PATENT SPECIFICATION

(11) **EP 0 319 588 B2**
(45) Date of publication and mention of the opposition decision: **04.02.1998**
(45) Mention of the grant of the patent: 13.07.1994
(21) Application number: 88905450.8
(22) Date of filing: 17.06.1988
(51) Int. Cl.: B60C 9/22, B29D 30/30

(54) **PNEUMATIC RADIAL TIRE AND PRODUCTION THEREOF**
RADIALREIFEN UND DESSEN PRODUKTION
PNEU RADIAL ET PRODUCTION DE CE PNEU

(30) Priority: 18.06.1987 JP 151987/87; 03.07.1987 JP 167435/87; 31.07.1987 JP 193523/87; 29.09.1987 JP 244775/87; 31.03.1988 JP 80495/88; 06.04.1988 JP 85671/88
(43) Date of publication of application: 14.06.1989
(60) Divisional application: 92202996.2
(73) Proprietor: SUMITOMO RUBBER INDUSTRIES LIMITED, Chuo-ku Kobe-shi Hyogo 651 (JP)
(72) Inventor: KOJIMA, Yoshihide, Hyogo 665 (JP); SAKUNO, Hiroaki, Kobe-shi Hyogo 651-11 (JP); TAKAMI, Masao, Kobe-shi Hyogo 673 (JP); MIYANAGA, Yoshinobu, Hyogo 673 (JP); KADOWAKI, Katsunori, Kobe-shi Hyogo 673 (JP)
(74) Representative: Stewart, Charles Geoffrey
(86) International application number: PCT/JP88/00609
(87) International publication number: WO 88/10199

(56) References cited:
- EP-A- 288 609
- EP-A- 0 235 579
- DE-A- 2 720 409
- FR-A- 1 586 370
- FR-A- 2 577 478
- GB-A- 1 487 426
- GB-A- 2 061 202
- GB-A- 2 070 526
- GB-A- 2 085 376
- JP-A- 5 830 805
- JP-A- 6 280 101
- JP-A-58 142 835
- JP-A-58 156 402
- JP-A-58 170 602
- JP-A-60 667 201
- JP-B- 5 761 601
- JP-U- 6 115 604
- LU-A- 85 964
- "Fahrwerktechnik: Reifen und Räder", pages 65-67, Vogel-Buchverlag,1986

## Description

This invention relates to a pneumatic radial tyre having a band reinforcing the belt or breaker and a method for manufacturing the same.

LU-A-85964 discloses a tyre of this type corresponding to the preamble of claim 1.

Pneumatic radial tyres having a belt of layers of metal cords reinforcing the tread portion have been conventionally used on high performance cars, and high speed durability, high speed driving stability and steerability have been obtained by means of the strong hoop effect of the belt in the overall tyre structure. The conventional maximum speed of cars of 100 to 200 km/h has however, been changed by vehicle developments and now some passenger cars may travel at 200 km/h or more, and sometimes at 300 km/h. In the field of racing cars, vehicles capable of such speeds already exist, but their driving is only in special conditions so that the tyres may be designed sacrificing some of the performance characteristics required in ordinary driving, for example, wear resistance and fuel economy. They are thus unsuitable to withstand general use on public roads.

If radial tyres having a conventional metal cord belt reinforcement are used at the high speeds mentioned above, their tread portions are deformed by centrifugal force and repeated distortions are generated in the tread portion. This deformation appears in various phenomena depending on the size, structure and materials of the tyre and may be, for example, a lifting phenomenon in which the outer diameter at the shoulder portion increases, a phenomenon in which the outer diameter in the centre portion increases and the radius of curvature of the tread decreases or the surface becomes an irregular curve, or a standing wave phenomenon.

These effects generate heat by repeated distortions in the tread and the temperature in the tread portions rapidly rise and the adhesion between the metallic cord surfaces and the rubber in the belt may fail and cause so called ply separation. In particular, tyres used in high speed driving as described above require a broad ground contact area to secure enough grip on the road surface and, therefore a flattened tyre having a wide tread is employed. In such wide profile flattened tyres since the size of the tread portion in he entire tyre is large, the above mentioned phenomena of deformation and heat generation tend to occur to a wide extent.

Use of a rubber with a small loss tangent ($\text{tan δ}$) is one effective means to decrease the heat generation, but when a rubber with a small loss tangent ($\text{tan δ}$) is employed, the tread grip is lowered and therefore the required high speed tyre performance properties are hard to obtain.

Alternatively, a decrease of the deformation of the tread portion without changing the formulation of the tread rubber can be achieved by increasing the hoop effect of the belt, but then the number of metal cord plies of the belt is increased and the weight of the tyre increases thus causing other adverse effects on the high speed properties of the tyre and a car using the tyre.

To solve these problems, it has been proposed to arrange a band comprising a multiplicity of independent cords embedded in rubber and parallel with each other in the circumferential direction of the tyre as disclosed in Japanese Patent Publication Kokai No. 47-14805, and Japanese Patent Publication Kokoku No. 55-45402. This band or bandage however, has at least one joint portion extending in the widthwise direction. The stiffness in the circumferential direction changes and usually decreases at this joint portion and the resultant large distortion tends to induce breakage. In addition, the joint portion may impair the uniformity of the tyre.

Accordingly, such a band is not good enough for use in the high speed ranges described above. A tyre having such a band is fine in ordinary speed ranges but in a speed range of more than 200 km/h or more than 300 km/h, it is impossible to prevent the deformation caused by the centrifugal force on the tread portion and insufficient durability is obtained.

It is hence a primary object of this invention to provide a tyre having a structure capable of withstanding use in these high speed ranges without sacrificing other general performance properties. Another proposal to solve the above problems provides a jointless band formed by winding one or a plurality of organic fibre cords spirally over the belt parallel to the central circumferential line of the tyre to produce band in which the densities of spirally wound cord are different between the crown and shoulder portions of the tyre so as to enhance performance. This is disclosed in Japanese Patent Publication Kokoku No. 44-17801 and Japanese Patent Publication Kokoku No. 57-61601, However, such a means has the problem that it takes much time to wind the cord and so productivity is inferior, and since the wound cord becomes asymmetrical in the section of the tyre, the uniformity properties such as conicity are poor. Furthermore, with a changing cord density, if the density is set too high, the cord surfaces contact each other, which may induce breakage at these points.

It is hence another object of this invention to provide a radial tyre having a superior uniformity and excellent productivity in which breakage in the shoulder portion of the belt due to lifting in driving is prevented and contact between cord surfaces is inhibited.

It is still another object of this invention to provide an assembly of belt, band and tread rubber which can improve the high speed durability of the radial tyre as mentioned above, and a method of and apparatus for forming the band.

Turning now to the manufacturing process for radial tyres, the usual process is to form an assembled body by winding each of the belt, band and tread rubber sequentially onto a belt drum.

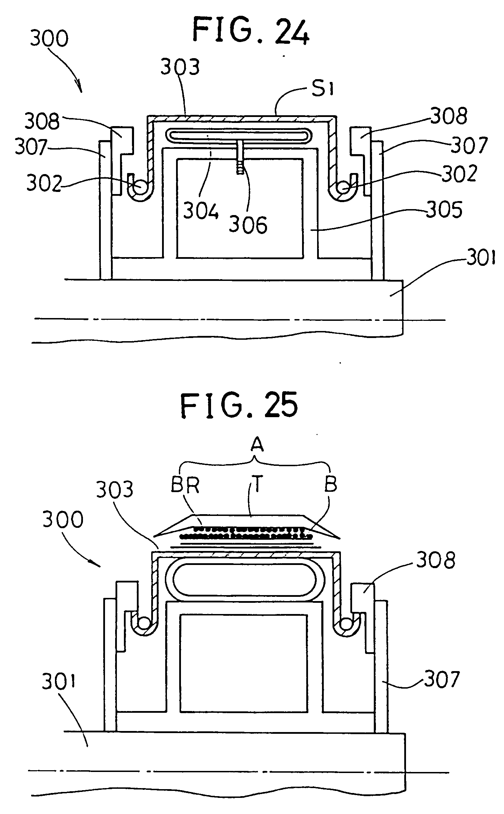

As shown in Figs.24 and 25 a conventional belt drum 300 is supported rotatably at one side on a shaft 301 and has a belt forming surface S1 shaped in the circumferential direction as an annulus and having a linear sectional shape in the axial direction. The belt forming surface S1 is formed by plural slats 303 each having a width of approximately 40 mm arranged radially over the entire circumference, and both ends of each slat are fastened by a pair of annular springs 302. An air bag 304 equipped with an air pipe 306 is fixed inside the slats each in the radial direction on a supporting base 305. Drum outer diameter defining rings 308 are detachably mounted on frames 307 disposed on both sides of the slats.

A conventional method of manufacturing an assembly of the belt, band and tread by using the above known belt drum is as follows:
The drum outer diameter is expanded by inflating the air bag with air supplied through the air pipe, at this time, the outer diameter of the drum is restricted to a specified belt adhering diameter by the drum outer diameter defining ring:

A belt B is formed (see Fig.25) by winding onto the belt forming surface S1 a plurality of plies each composed of cords which are coated with rubber in the form of a cord fabric.

This is arranged so that the cords of each successive ply cross at an angle of 10 to 40 degrees with regard to the circumferential direction.

A band BR is then formed by winding on one or two plies of cords which are coated with rubber in the form of cord fabric, onto the circumferential surface of the belt B at an angle of almost 0 degrees with respect to the circumferential direction and a tread rubber T is wound onto the radially outer side of the band BR, thus forming an assembly A.

The assembly is taken off the belt drum by using a holding means and transferred to the centre of a preassembled cylindrical tyre carcass on a tyre forming drum. The tyre carcass is sequentially expanded into a toroidal shape by air pressure so as to have its circumferential surface pressed tightly against the inside of the belt assembly. The belt is then pressed and attached to the tyre carcass over its full width by a tread attaching roller so that the assembly is consolidated to provide a raw tyre.

Furthermore, in Japanese Patent Publication Kokai No. 61-51979 there is disclosed a method for forming a band by spirally and continuously winding one or a multiplicity of synthetic fibre cords in the circumferential direction onto the circumferential surface of a belt formed on the belt ring, covering at least 70% of the belt width, with a pitch of 5 to 15mm in the widthwise direction.

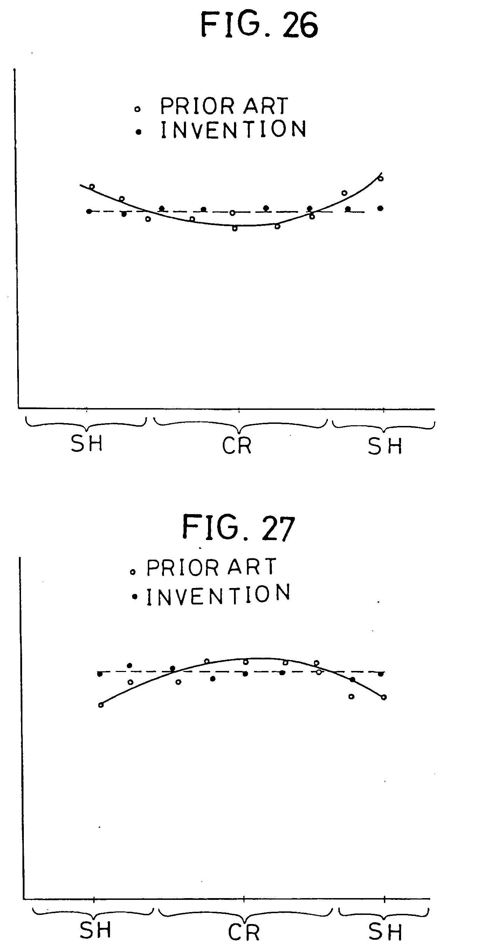

In this method however since the winding pitch of the cord is as wide as 5 to 15mm, the disadvantageous expansion of the equatorial diameter of the raw tyre due to the shaping pressure in the vulcanising process is effectively prevented, but the thermal shrinking force of the band is weaker at the shoulder portions than in the centre portion as shown in Fig.27.

Consequently, one of the necessary characteristics, that is to prevent the lifting phenomenon of the belt owing to centrifugal force during high speed running is not achieved.

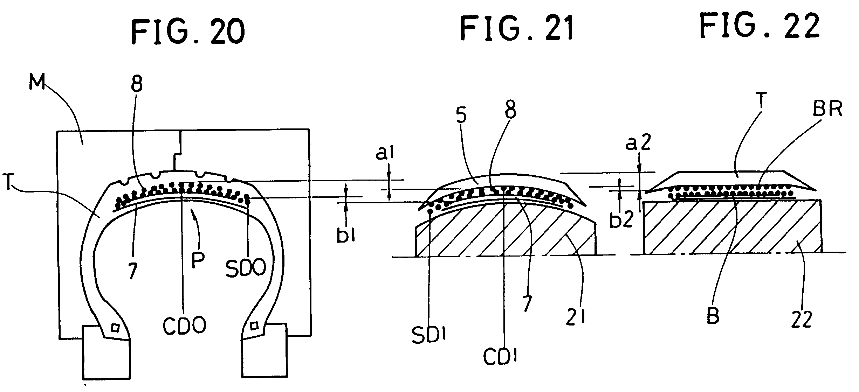

This problem results from the fact that the band is formed by winding on a cylindrical drum having a linear sectional shape in the axial direction as described above and as shown in Figs. 24, 25 and 22 even though the belt and band of the finished tyre in the mould are convex in sectional shape in the axial direction (final shape) as shown in Fig.20.

That is, though the circumferential winding lengths in forming the band are identical for the shoulder portions and the centre portion the circumferential lengths of the belt after fully shaping and vulcanising the tyre become shorter in the belt shoulder portions and longer in the belt centre portion due to the shaping (expanding) process in vulcanisation. As a result, the stretch becomes larger at the centre portion and smaller at the shoulder portions of the belt, and the thermal shrinking force is lessened at the shoulder portions. Since a larger stretch is applied to the centre portion of the belt, a stretch difference exceeding 2% usually occurs.

The trouble mentioned above is caused because the stretch difference appears as the differences in residual elongation and thermal shrinking force as shown in Figs. 26 and 27. Here, the term "stretch" means percentage of finished diameter to the winding diameter of the belt.

Accordingly, another object of this invention is to provide an assembly of belt, band and tread rubber in which the difference of the stretches between the centre portion and the shoulder portions of the band is made as small as 2 % or less and to raise the thermal shrinking force a the shoulder portion.

One aspect of the present invention provides a pneumatic radial tyre comprising the features of claim 1.

Another aspect provides a method for manufacturing a radial tyre comprising the steps of shaping a cylindrical tyre carcass into a toroidal shape, and assembling a belt and a tread onto its outer surface, wherein the method comprises the steps of laminating the predetermined number of belt plies on a belt ring or a belt drum to form said belt and continuously winding a single organic fibre cord or a plurality of parallel organic fibre cords which are embedded in rubber in a tape-like shape onto the outer surface of the assembled belt, characterised by winding the single cord or plurality of cords continuously and spirally in the circumferential direction of the belt from one shoulder portion to the other shoulder portion of the tyre to form a full band layer for reinforcing said belt and in that the tension applied to said organic fibre cord when winding the cord is changed so as to be a minimum at the crown portion of the tyre and a maximum at the shoulder portions of the tyre.

In a further aspect, the invention relates to a method for manufacturing a radial tyre comprising the steps of shaping a cylindrical tyre carcass into a toroidal shape, and assembling a belt and a tread onto its outer surface, wherein the method comprises the steps of laminating the predetermined number of belt plies on a belt ring or a belt drum to form said belt and continuously winding a single organic fibre cord or a plurality of parallel organic fibre cords which are embedded in rubber in a tape-like shape onto the outer surface of the assembled belt, characterised by winding the single cord or plurality of cords continuously and spirally in the circumferential direction of the belt from one shoulder portion to the other shoulder portion of the tyre to form a full band layer for reinforcing said belt and in that the tension applied to the organic fibre cord when winding the cord is constant and the diameter of the cord winding in the wound state gradually decreases from the crown portion towards the shoulder portions of the tyre.

Further aspects of the invention will be apparent from the following descriptions of some embodiments in conjunction with the attached diagrammatic drawings in which:
Fig.1 is a sectional view showing a first embodiment of the pneumatic radial tyre of this invention:
Fig.2 is a perspective view showing an arrangement of a belt, a band and a tread rubber in another embodiment
Fig.3 is a perspective view showing schematically the state of the winding of a cord of the band
Fig.4 is a section view showing still another embodiment
Fig.5 is a view showing a distribution of elongation of the cord of the band under a prescribed load
Fig.6 is a view showing an instance of the relationship between the ratio of the width of the edge band layer to the width of the full band layer and the rate of breakage of a tyre
Fig.7 is a perspective view showing cords formed into a tape
Fig.8 is a perspective view showing a single coated cord
Fig.9 is a perspective view showing a non coated cord
Figs. 10 to 13 are sectional views of a method for producing radial tyres of this invention.
Fig. 14 to 16 are views showing a manner of winding a cord for forming a band of symmetrical structure.
Fig. 14a is a view showing a manner of winding or provide an asymmetrical structure.
Figs 17 to 19 are views showing a distribution of elongation under a prescribed load of a cord of the band of the tyre used in a test.
Figs 20 to 22 are views for illustrating a method for forming a belt band tread rubber assembly of this invention, in which Fig 20 shows curing of a tyre, Fig.21 shows a forming of the assembly and Fig 22 shows a conventional forming method.
Fig 23 is a view showing a step in a method for producing radial tyres.
Figs 24 to 25 are axial sectional views showing a conventional belt drum
Fig 26 is a view showing a distribution of residual elongation of a cord of a band.
Fig. 27 is a view showing a distribution of thermal shrinking force of a cord of a band and
Fig. 28 is a view showing another assembly which can be formed by using the method for forming belt band tread rubber assemblies of this invention and the forming apparatus of this invention.

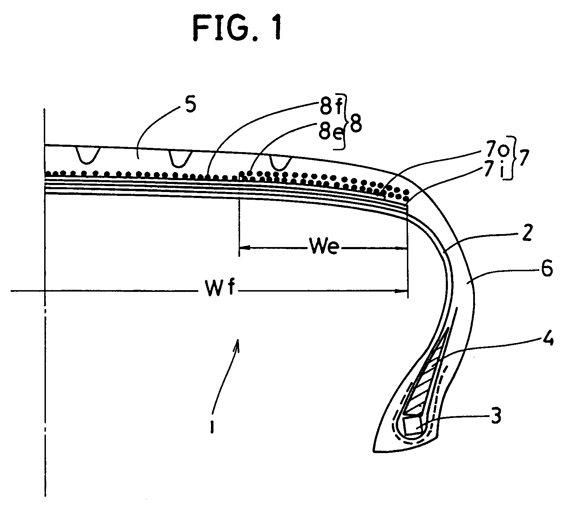

In Fig 1 a tyre 1 comprises a pair of bead cores 3, a pair of apexes 4, a carcass 2, annular tread 5, a pair of sidewalls 6, a belt 7, and a band 8.

The bead cores 3 are arranged in the bead portions of the tyre. The bead apexes 4 are made of hard rubber and disposed outside the bead cores 3 with respect to the radial direction of the tyre 1. The carcass 2 comprises a ply of cords arranged in the radial direction of the tyre, and turned up around the bead cores 3.

The carcass 2 may comprise one or a plurality of pies.

The belt 7 is arranged on the shoulder outer side of the carcass 2 and comprises two or more plies of fabric of metal cords. In this embodiment, it is composed of an inner ply 7i and an outer ply 7o, but one or two other plies may be interposed between them. In the drawing, the inner ply 7i has a larger width than the outer ply 7o but it does not matter if the outer ply is the wider. If the two plies have the same width, however, the bending stiffness in the section varies drastically at the edges, which makes an adverse effect on the durability, so that it is necessary to make these plies (7i & 7o) of different widths.

The metal cords of the belt plies 7o, 7i are arranged at an angle of 10 to 30 degrees with regard to the equatorial line of the tyre.

The band 8 is located on the radially outer side of the belt 7. The band comprises a full band layer 8f and a pair of edge band layers 8e.

The full band layer 8f is disposed over the full width of the belt 7, that is, over the full width of the inner ply 7i which is the wider ply. Each edge band layer 8e is arranged between the full band layer 8f and the belt 7 or between the full band layer 8f and the annular tread 5 in the region near the belt edge.

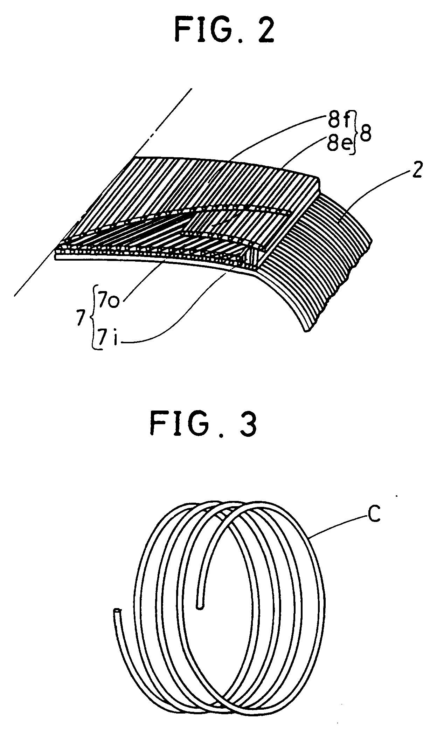

Fig.2 is a perspective view showing the arrangement of the carcass 2, belt 7 and band 8 in the case where the disposition of the edge band layers 8e and full band layer 8f is reversed.

It is preferable to match the edges of the full band layer 8f, edge band layers 8e and the inner ply 7i of the belt. When the edges of the full band layer 8f and the edge band layers 8e are located inwardly from the belt edge, the lifting described above is difficult to stop and even if they are located outside the belt edge position, no real effect is obtained.

Moreover, extra material is required for the extra portion and since organic fibre cord must be wound onto the rubber member in an area where no metal cord is present, it induces a problem in maintaining the uniformity of cord tension and the cord position in the manufacturing process.

The ratio We/Wf of the width We of the edge band layer 8e measured in the axial direction of the tyre to the width Wf of the full band layer 8f measured in the axial direction of the tyre is set in the range of 0.2 to 0.3. When the ratio We/Wf is less than 0.2, the tyre durability drops down sharply. On the other hand, even if We/Wf exceeds 0.3, no further improvement in durability is found. Also, it has been found that a tyre in which We/Wf is larger than 0.3, tends to give poor vehicle control because the stiffness of the entire tread portion is too large.

Thus it is necessary for the value We/Wf to be within the range of 0.2 to 0.3.

The edge band layers 8e and full band layer 8f are composed of organic fibre cords substantially parallel to the equatorial centre line of the tyre. The organic fibre cord C is a single long cord composed of a multiplicity of single yarns or twisted yarns such as spun yarn, monofilament yarn or multifilament yarn or organic fibre made of nylon 66, nylon 6, polyester, Kevlar or the like.

The cord C is formed of one or more cords wound spirally in the circumferential direction of the tyre in each layer as shown schematically in Fig.3. Consequently, conventional joints no longer exist in each layer and the troubles caused by the existence of joints are completely avoided. In the conventional joint, both ends in the circumferential direction of each layer are commonly made to contact each other end to end, so that this portion cannot endure a large tension in the circumferential direction. It therefore often induces breakage in high speed use. The joint portions also spoil the uniformity of the tyre.

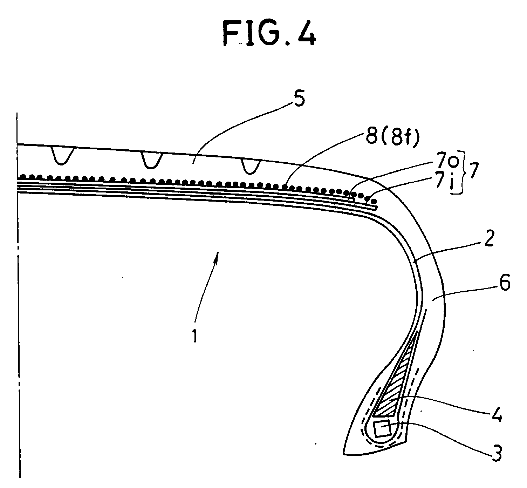

Fig. 4 is a sectional view showing a second embodiment of the pneumatic radial tyre of this invention. In this embodiment, the band 8 has only a full band layer 8f with no edge band layer 8e.

This full band layer 8f is composed, in the same way as in the former embodiment, of one to three organic fibre cords C spirally wound in the circumferential direction as shown in Fig. 3. The elongation at a given load of the organic fibre cord has such distribution that it becomes smaller from the crown portion to the shoulder portions of the tyre. Here, the elongation at a given load is measured by the method specified in JIS L1017, and expresses the elongation of the cord under a load determined according to the material and the thickness of the cord.

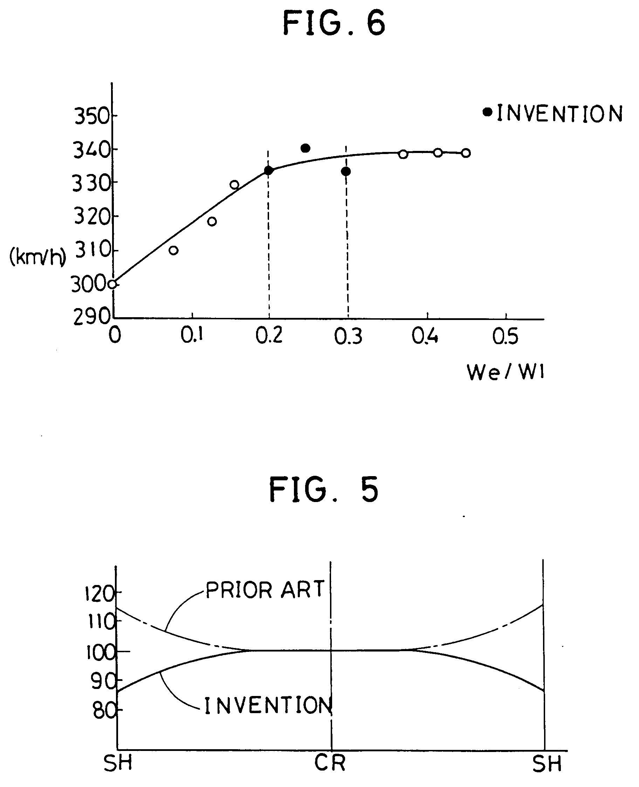

Fig.5 shows an example of the distribution of the elongation at a given load of the organic fibre cord contained in the full band layer 8f. In this graph, the ordinate axis indicates the elongation at a given load of each tyre, which is expressed by an index where the value at the crown portion of each tyre is regarded as 100. The axis of the abcissas indicates the portions of the tyre, and the expressions CR" crown portion", "SH" shoulder portion'' show the positions of the tyre equatorial surface, the band layer, and the position of the belt edge, respectively. In the distribution of conventional products, as shown by a dot and dash line, the values tend to become larger in the shoulder portions than at the crown portion, so that the binding force of the band at the shoulder portions is lower in comparison with that in the crown portion. In contrast, the distribution of the product of this invention, shown by a solid line, show clearly that the elongation at a given load becomes smaller nearer to the shoulder portions.

This distribution can be obtained by winding organic fibre cords while applying a larger tension when nearer to the shoulder portions.

The tyre of this invention can be produced by either (a) a method comprising the steps of winding a belt 7 on a belt drum and then spirally and continuously winding a rubberised organic fibre cord onto the belt 7 to form a band 8, winding a tread 5 on the band 8, thus forming an annular assembly positioning thus annular assembly around a tyre forming drum, and adhering a separately formed tyre carcass to this assembly by shaping it or (b) a method of winding the belt (7) band (8) and tread 5 directly onto a tyre carcass which has been assembled and shaped up ready for said components.

In winding the organic fibre cord C, it is acceptable to wind several cords, e.g. 2 or 3 cords, with guidance to maintain alignment or to wind only one cord.

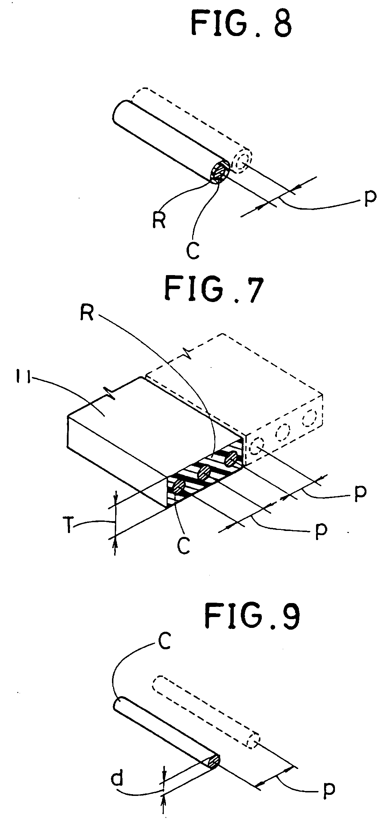

Fig.7 shows cords in which several cords are aligned and combined into one body by coating with rubber R and forming a tape shape (belt or ribbon like body). If a plurarity of cords are arranged and united in a body like this it becomes easy to accurately set a pitch p between the cords. This tape like body can be easily formed by an extruding machine or a profile calender. In the case of a ribbon, it is preferably from the viewpoint of uniformity of the tyre to set the number of cords to such an extent that the angles of the wound cords to the circumferential direction may not exceed 0 degrees by much. Here, the drawing shows a tape like body 11 composed of three cords, but the number of cords may be selected in a range not exceeding 10 or in a preferred tape 5.

When embedding several cords in the coating rubber, the amount of rubber contained in one pitch is expressed by the equation.${\text{T x p - π x d}}^{\text{2}} \text{/4}$ Where T indicates the thickness of the tape like body.

In the case of winding a single organic fibre cord, preferably the cord is previously covered with a coating rubber R as shown in Fig.8. The thickness t of this coating rubber should satisfy the relation.$\text{0.1 mm ≦ t ≦ 0.2 mm}$

The diameter d of the organic fibre cord C is set so that the pitch p which is the distance between the centres of the cords becomes:$\text{p = d + 2t}$ The diameter d is measured by the method specified in JIS L 1017. The amount of rubber contained in one pitch is${\text{π x (p}}^{\text{2}} {\text{-d}}^{\text{2}} \text{)/4}$ and when $\text{T = p}$, the band is short of rubber in an amount expressed by:${\text{(p}}^{\text{2}} {\text{- πd}}^{\text{2}} {\text{/4) - π x (p}}^{\text{2}} {\text{- d}}^{\text{2}} {\text{)/4 = (1 - π/4) x p}}^{\text{2}}$ The shortage of rubber induces corrugations on the band surface in the finished tyre. If the corrugations are large, an adverse effect is given on durability.

The present inventors made a test changing the thickness of the rubber applied to organic fibre cords, and as a result, they have found that a sufficient durability is obtained when the rubber thickness t is 0.1 mm or more. Also if the rubber thickness t exceeds 0.2mm the pitch p becomes so large that the organic fibre cords may be insufficient and thus sufficient tread stiffness cannot be obtained.

The diameter d of the above cords, meanwhile, is determined by the strength required in preventing the lifting and it is, for example,$\text{0.5mm ≦ d ≦ 1.5mm}$ Also, the thickness t of the rubber coating is determined by the necessary durability and it is, for example,
0.05mm ≦ t ≦ 0.8mm or more preferably,
0.1mm ≦ t ≦ 0.2mm as mentioned above.

For the coating rubber R, the same or equivalent rubbers as those used as a coating rubber for conventional bands (nylon band having a joint portion extending in the widthwise direction) can be employed, for example, a rubber compound mainly composed of natural rubber, a blend of natural rubber and SBR, and other rubbers which have a good adhesion to the cords.

When winding the above mentioned organic fibre cords, a tension is applied to the cords. This winding tension may be uniform in the widthwise direction of the belt but preferably the cords are wound so that the cord tension after vulcanisation of the tyre becomes uniform across the entire width of the belt, or so that the winding tension of the cord becomes greatest at the shoulder portions of the belt and is smallest at the centre portion so as to make the elongation of the cord at a given load small at the shoulder portions of the belt and large at its centre portion. By this means the necessary stiffness at the tread portion with the necessary distribution throughout the section of the tyre can be obtained without providing any edge band layer or changing the density of the cords. Moreover, the high speed durability of the finished tyre can be further enhanced. In this case, the value of winding tension can be arbitrarily selected depending on the size and structure of the tyre, but if it is set so as to be a minimum at the crown portion of the tyre and to gradually increase toward the shoulder portions to reach a maximum at the shoulder portions of the belt, the cord tension of the band in the vulcanised tyre becomes more uniform over the entire width of the belt. Besides, if the increment of the winding tension at that time is set at a value necessary for giving an elongation corresponding to the differences of the outer diameters between the crown portions and other portions of the band in the finished tyre, a uniform stiffness in the circumferential direction can be obtained.

For instance, when using nylon 66 1260 D/2 as the organic fibre cord, the winding tension is set at a minimum in the crown portion of 20 g, and is gradually increased towards the shoulder portions to reach a maximum at the shoulder portions of 40 g. When done in this way, the cord tension of the band in the vulcanised tyre becomes uniform over the entire width at 50g.

Similar effects can be obtained by setting the winding tension constant and gradually increasing the cord winding diameter from the crown portion toward the shoulder portions. Then using nylon 66 1260 d/2 as the organic fibre cord, it is preferable to set the winding tension constant in the range of 30 g to 50 g.

Also, the organic fibre cord C is preferably wound so that the radius of curvature of the section of the band upon forming coincides with the radius of curvature of the band in the finished tyre, so that the difference between the stretch at the centre of the band and the stretch at the shoulder portions is less than 2% (this will later be explained in more detail in the method for forming an assembly of belt, band and tread rubber). By doing so, the residual elongation or thermal shrinking force of the organic fibre cord of the band in the finished tyre becomes uniform between the centre portion and the shoulder portions or becomes higher in the shoulder portions, thus loss of the hoop effect of the band in the shoulder portions of the belt can be prevented.

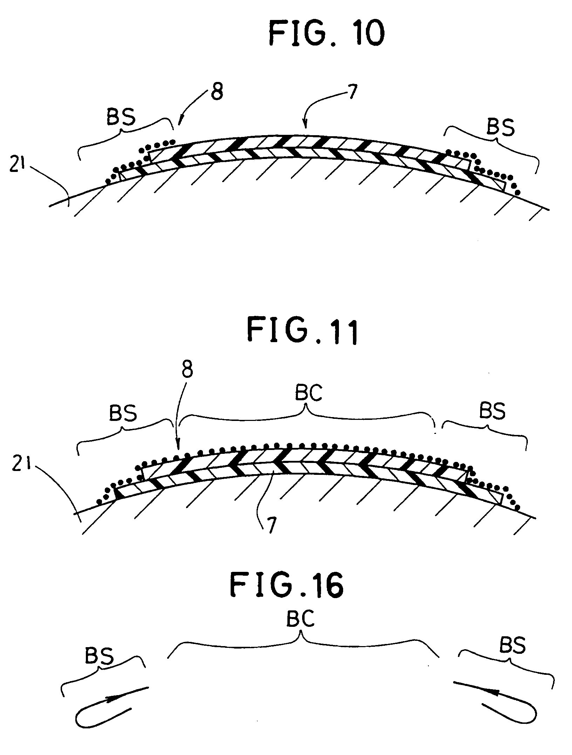

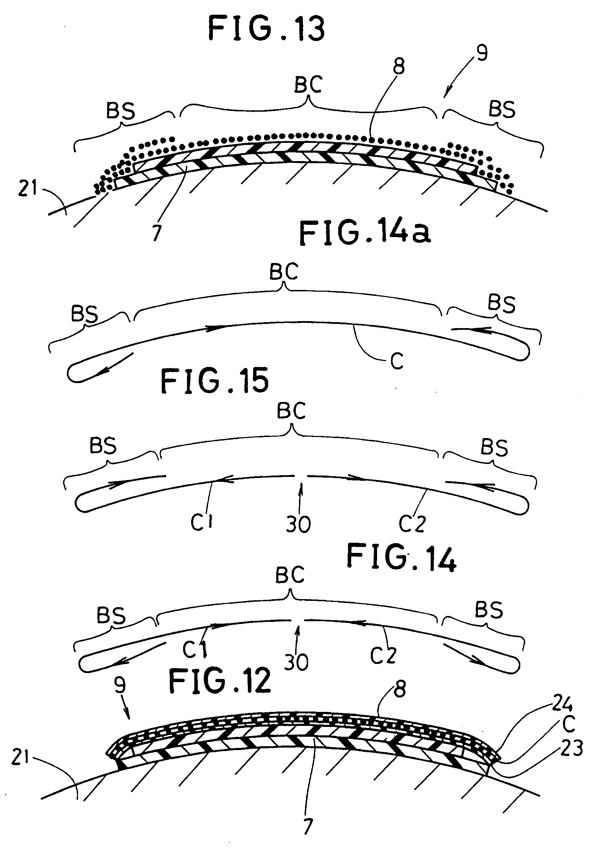

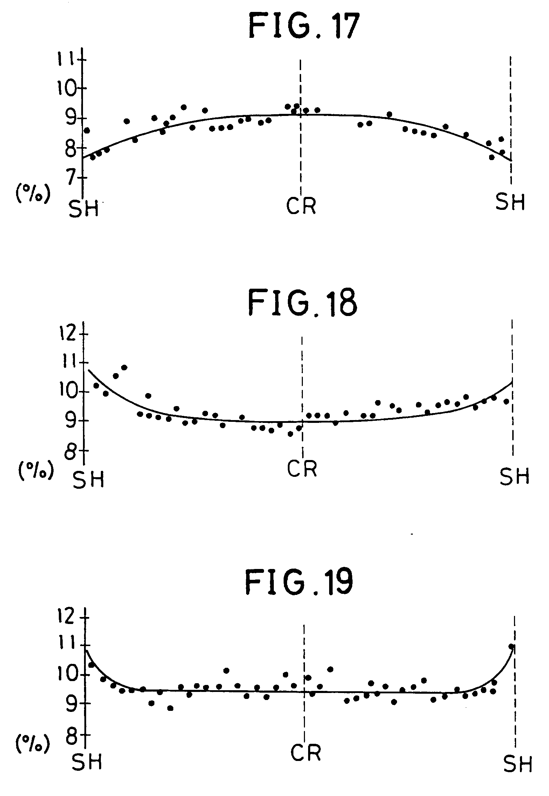

Fig.10 to 13 are sectional views showing the winding process for an organic fibre cord in manufacturing process of the tyre. Figs.14 and 15 are sketches showing the method of winding.

Fig.10 shows forming a band having only a pair of so called edge band layers wherein one or more rubber coated cords C are wound at both shoulder portions BS of the belt 7 onto the circumferential surface of the belt 7 which is a two ply structure wound onto the belt drum or belt ring 21. In this case, it is necessary to set the winding pitch of the cord at 0.5 to 5.0mm as described above to prevent the lifting of the shoulder portions of the belt. The above mentioned spiral winding should be made in one turn or more, in compliance with necessity, outwardly from the equatorial plane of the tyre or in the opposite direction so as to have a symmetric structure to each other.

Fig.11 shows the formation of a band equipped with only a so called full band layer by continuously winding the rubber coated cord C over 70% of the entire width of belt 7 on the outer surface of the belt 7 of a two ply structure wound on the belt drum or belt ring 21. It is necessary that the winding pitch is from 0.5 to 5.0mm in the shoulder portions BS of the belt to prevent the lifting in the belt shoulder portions, and also the pitch is from 0.5 to 15.0mm in the centre portions BC of the belt. This spiral winding is also made, in the same way as the above, in one turn or more as necessary to give a symmetric structure outwardly from the equatorial plane of the tyre or in the reverse direction.

In Fig.12 a thin rubber sheet 23 is wound onto the outer surface of the belt 7 of a two ply structure wound on the belt drum or belt ring 21, and one or more non rubber coated cords C are wound continuously and spirally onto the rubber sheet in the circumferential direction at a pitch 0.5 to 5.0 mm in the belt shoulder portions and 0.5 to 15.0mm in the belt central portion. Furthermore, a second rubber sheet 24 is wound to sandwich the spirally wound cords between the rubber sheets. In this case, for the material of the rubber sheet it is preferable to use a material having a good adhesion to the cord in the same way as the material used as the above mentioned coating rubber. After winding the second rubber sheet 24, the rubber sheet 24, cord C and the rubber sheet 23 are consolidated by pressure rollers to cause the rubber to enter between the cords before winding the tread rubber.

Fig.13 shows a band composed of a combination of a full band layer and edge band layers.

In this band, the number of cords per unit length (density) cord size and pitch can be changed as occasion demands.

In any case, winding is conducted so as to be symmetrical in structure with regard to the tyre equatorial plane in the same way as described above. That is, in the case of a structure having two layers at portions BS and one layer at portion BC, there are methods such as winding cords C1 and C2 from the centre position 30 towards both sides symmetrically and folding them over at both edges as shown in Fig.15, or starting the winding from portion BC and folding it over to return to the centre as shown in Fig.14. In the case of winding only on portion BS, it may be wound by folding over at the edges as shown in Fig.16. Also, Fig.14a shows a way of winding asymmetrically.

Sample tyres of size 255/40VR17 were produced and tested. These test tyres had the sectional structure shown in Fig 1 and the following basic structure except for the band structure their construction were identical.

### Basic structure

| | |
|---|---|
| Belt material | Metallic cord |
| Number of belts | 2 plies |
| Belt angles | 24 degrees |
| Carcass material | Polyester |
| Band material | Nylon 66 1260 d/2 (by single winding) |

The test was an indoor durability test using an indoor bench tester, in which test tyres having various values of We/Wf from 0 (that is, without any edge band layer) to 0.45 were driven for 20 minutes at prescribed speeds stepping up the speed at 10 km/h increments under the conditions of standard internal pressure and load, and the speed at which each tyre was broken (hereinafter referred to as breaking speed) was measured.

Fig.6 is a graph showing the results, in which the axis of ordinates indicates the breaking speed, and the axis of the abscissas denotes the value We/Wf.

It was found from the graph that the breaking speed drastically falls when We/Wf is smaller than 0.2 and that the breaking speeds does not further rise when We/Wf exceeds 0.3. It was also found that tyres having a value We/Wf of more than 0.3 tend to give poor vehicle control in an actual car test because the stiffness of the entire tread portion becomes too high.

Another three kinds of tyres of the same size as above having a sectional structure as shown in Fig.4 and a structure shown in Table 1 were produced and subjected to the same indoor durability test.

**Table 1**

| | Example 1 | Example 2 | Com. Ex. |
|---|---|---|---|
| Tyre size | 255/40 VR17 | 255/40 VR17 | 255/40 VR17 |
| Belt material | metal cord | metal cord | metal cord |
| Number of belts | 2 | 2 | 2 |
| Angle of belt | 24 degrees | 24 degrees | 24 degrees |
| Carcass material | polyester | polyester | polyester |
| Structure of band | full band | full band | full band |
| | 1 ply | 1 ply | 1 ply |
| | joint: none | joint: none | joint: present |
| Band material | nylon 66 1260d/2 | nylon 66 1260d/2 | nylon 66 1260d/2 |
| Cord diameter (d) | 0.60 mm | 0.60 mm | 0.60 mm |
| Rubber thickness (t) | 0.15 mm | 0.15 mm | -- |
| Pitch (p) | 0.90 mm | 0.90 mm | 0.90 mm |

| Tension of cord in winding (T) | | | |
|---|---|---|---|
| Crown part | 35 g | 35 g | -- |
| Shoulder part | 45 g | 45 g | -- |
| Distribution of elongation under given load of band cord | shoulder part < crown part | shoulder part > crown part | shoulder part > crown part |
| | shown in Fig. 17 | shown in Fig. 18 | shown in Fig. 19 |
| Breaking speed | 350 km/h | 300 km/h | 260 km/h |

Example 1 has a distribution of elongation at a given load of the cord of the full band later as shown in Fig.17.

Example 2 is similar to Example 1 in apparent structure, but the distribution of elongation at given load of the cord of the full band layer is the reverse of the profile of Example 1 as shown in Fig.18.

Comparative Example 1 in which the belt had provided a conventional full band layer possessing a joint extending in the widthwise direction at one position in the circumferential direction of the tyre, had a distribution of elongation at a given load of the cord of the full band layer as shown in Fig.19.

The result of indoor durability tests of these tyres in the same conditions as mentioned above showed Example 1 of this invention to have a marked improvement effect as compared with the Comparative Example, and its durability performance was nearly equal to that of the structure with the intervening edge band layer mentioned above.

Also, in the case of Example 1 where the band was formed by gradually increasing the cord tension in winding from 35g to 45g from the crown portion towards the shoulder portion, the breakdown level was further raised in comparison to Example 2 in which the winding was conducted at a constant tension of 35g.

The distribution of stiffness in the peripheral direction of the band at each of the various positions in the widthwise direction corresponds very well to the elongation at a given load of the cord at each position. the elongation at a given load is elongation (%) at a load determined according to the code specified in JIS L 1017, and the larger this value, the smaller the stiffness in the peripheral direction, and the smaller the elongation at a given load, the larger the peripheral stiffness. As shown in Figs. 17 to 19, it is evident that the distribution tendency of the elongation at given load of the cord of the band is reverse in Example 1, as compared with Comparative Example and Example 2. This means that the peripheral stiffness of the shoulder portion of Example 1 is higher, and as a result, Example 1 possesses a higher breaking speed.

Furthermore, in actual car test, the grip performance of the tyre of Example 1 is equal to that of the Comparative Example, and its control performance is the best of the three tyres.

As explained above, since one more organic fibre cords were continuously spirally wound parallel to the peripheral direction onto the outer surface of the belt so as to be dense in cord pitch in the belt shoulder portion, and so that the winding tension was a maximum in the belt shoulder portion, thus forming a band, the stretch difference between the belt shoulder portions and the belt middle portion of a vulcanised tyre becomes small, so that the thermal shrinking force at the belt shoulder portion is raised. Thus an action of preventing the lifting of the belt in use is markedly exhibited.

Accordingly, separation damage of the belt due to lifting in use is effectively prevented.

Furthermore, since the cord has a symmetrical spiral structure with respect to the tyre equatorial plane, the uniformity of the tyre is excellent. Also, the cord of the symmetrical structure is easy to wind so that the productivity is excellent, too.

The full band layer placed over the entire width of the belt serves to decrease the deformation of the entire tread caused by the centrifugal force applied to the tread portion in high speed use, while the shoulder edge band layer works to prevent the lifting and standing wave phenomena.

Therefore, deformation of the tread due to centrifugal force in tyres used at high speeds of over 200 km/h or even faster than 300 km/h and in particular in superflattened tyres with flatness ratios of 50% or less is controlled so that the damage resulting from deformation is prevented, and accordingly, the durability performance is improved without decreasing other performance properties.

Besides, when the full band layer has such a distribution that the elongation at a given load of the organic fibre cords contained therein becomes smaller approaching the shoulder portion, the combined effect of the shoulder edge band layer and the full band layer can be obtained by one layer of full band.

Next is explained the method of forming the assembly of belt, band and tread rubber of this invention.

This invention relates to a step of forming an integral assembly of belt, band and tread rubber by using a belt drum having a diameter which can be expanded or contracted, in the manufacturing process of a radial tyre. For the other steps, conventionally known forming steps of radial tyres can be adapted.

What is completely different between this method and the conventional method where both the belt and band are formed in a cylindrical shape is that first the belt is formed cylindrically as in the conventional method, but the band is formed from the outset in the shape required of the finally finished in a mould or close to that shape. This is the most characteristic point of this method. It is also possible to form the band in a convex shape so that the difference between the stretch of the organic fibre cord of the band at its centre portion and shoulder portions is within 2%, or to wind the cord at a specified winding pitch.

The final finished shape or contour of the band is shown in Fig.20 for the finished tyre in the mould M when the vulcanisation of the tyre is over and it can be seen to give a convex or arc shape.

The stretch of the band is the percentage of the finished diameter (DO, SDO) to the winding diameter (CD1, SD1) as shown in Figs 20,21. The winding diameter in turn, refers to the diameter when the band 8 is wound on the radially outer side of the belt 7 on the belt drum 21, while the finished diameter indicates the diameter when expanded to the final finished shape of the band in the mould M by the shaping internal pressure P in vulcanisation.

The middle portion stretch is (CDO/CD1-1) x 100 (%), for example, 2.5% and the shoulder portion stretch is (SDO/SD1-1) x 100 (%), for example, 1.5%.

In this invention, the sectional shape in the axial direction of the band 8 in the assembly of belt, band and tread rubber formed on the belt drum 21 is formed in a convex shape such that the difference between the two stretches falls in a range of 0% to 2%.

In the case where the difference of the stretches is within 2%, the radius difference al at the middle portion between the radius when forming the middle portion of the band 8 and the radius when finishing in the mould, and the radius difference b1 at the shoulder portion between when forming the shoulder portion and when finishing in the mould are equal to or nearly equal to each other, as shown in Figs. 20 and 21. That is, the centre portion radius difference and the shoulder portion radius difference becomes identical or nearly identical, thus the band exhibits a sufficient hoop effect even in the shoulder parts of the belt.

When the difference of both stretches exceeds 2% so that the central portion stretch is larger than the shoulder portion stretch, the result becomes similar to that of a conventional method using a belt drum 22 which is linear in axial cross section as shown in Fig. 22, and hence it is not practicable because an insufficient hoop effect from the band is obtained in the shoulder portions of the belt.

In contrast with this, when the stretch difference exceeds 2% such that the shoulder portion stretch is larger than the centre portion stretch, the radius in the shoulder portion becomes relatively small at the time of winding the band cord. Therefore, a gap is easily formed between the outer surface of the shoulder portion and the inner surface of a mould when placing the raw tyre in the mould for curing. Consequently, the belt, particularly its edge portion, stretches excessively under the pressure applied for shaping and curing and so this portion is easily deformed, resulting in a defective tyre.

Accordingly, the stretch difference should be kept in the range of 0% to 2%.

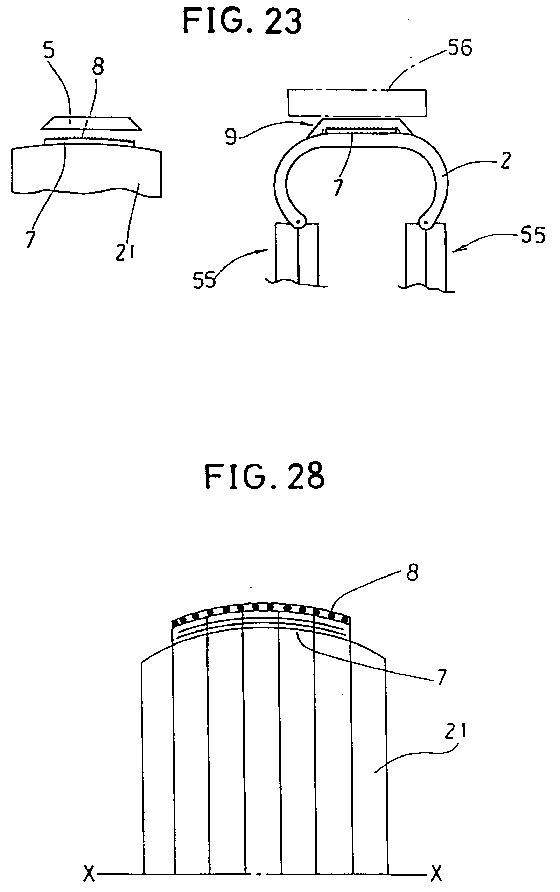

The belt is formed in its cylindrical shape by winding a plurality of rubberised belt plies composed of inorganic fibre cords such as steel or organic fibre cords such as an aromatic polyamide with the cords at an angle of 10 to 40 degrees with respect to the circumferential direction onto the unexpanded cylindrical belt drum 21 as shown in Fig. 23 so that the cords of one ply cross the cords of the other ply. Then the band formation may be corrected by (1) winding only one ply, (2) winding 2 or more plies or (3) winding one ply and thereafter winding to form 2 plies in both shoulder zones only.

In another embodiment, the band may be formed by cutting a long sheet in the form of cord fabric composed of a multiplicity of organic fibre cords coated with rubber to a width covering the full width of a belt, cutting it to a length at least equal to the length of the circumference of the belt plus an overlapping joint width, dividing it in the widthwise direction into three or more tapes, and winding them in order on the belt over the full width thereof at an angle of approximately 0 degrees with respect to the circumferential direction.

In the above embodiment, the winding tension is in principle constant. Also, if the cord angle of the band exceeds 5 degrees the so called hoop effect (the effect of preventing growth of the belt layer, namely the lifting, by fastening the belt layer tightly over the full circumference like a hoop) is not obtained sufficiently.

As explained above according to the method of this invention, upon forming an assembly of belt, band and tread rubber using a belt drum, the band is formed into the same or similar shape as its final shape in the mould.

This shape is usually a convex shape where the value of the difference between the middle portion stretch and the shoulder portion stretch of the band is less than 2%. Consequently, the residual elongation and thermal shrinkage of the cord in the moulded tyre is made substantially uniform between the middle portion and the shoulder portions, thus lifting of the belt by centrifugal force in running is prevented and the high speed durability of radial tyres is enhanced.

Also, one or more organic fibre cords are continuously and spirally wound, parallel to the circumferential direction, on the outer surface of the belt, so that the winding tension is uniform over the entire width of the belt, or as required a maximum at the shoulder portion, or the winding pitch may be dense at the belt shoulder portion. Consequently, the difference in stretch between the belt shoulder portion and belt centre portion of the vulcanised tyre is reduced, and the thermal shrinking force of the belt shoulder portion is improved, so that the action to prevent lifting of the belt in use is strongly achieved so this separation damage of the belt due to lifting in use is prevented more securely.

Besides, by using the device of this invention, the execution of the above method can be done more efficiently and precisely.

This invention is applicable to radial tyres having various structures, tread patterns and tyre sizes, and in particular this invention is effectively applicable to flattened tyres for high speed running.

## Claims

1. A pneumatic radial tyre comprising a pair of bead cores (3) disposed in bead portions of the tyre, a carcass (2) having at least one ply of radially arranged cords turned up around said bead cores (3), a tread portion (5) over said carcass, a belt (7) arranged on the radially outer side of said carcass (2) beneath the tread and having at least two plies (7o,7i) of metal cords arranged at an angle of 10 to 30 degrees to the circumferential direction and a band (8) made of at least one continuous organic fibre cord spirally wound substantially parallel to the tyre circumferential direction located on the radially outer side of the said belt, the band (8) comprising a full band layer (8f), the full band layer (8f) formed by winding a single cord or a plurality of parallel cords embedded in rubber in a tape-like shape, characterised by each cord being a continuous organic fibre cord, spirally and continuously wound from one shoulder portion to the other shoulder portion of the tyre so that the full band layer (8f) consists of a single ply of the at least one continuous organic fibre cord and the elongation, at a given load, of each said organic fibre cord (C) of said full band layer (8f) decreases from the crown portion of the tyre towards the shoulder portions.

2. A tyre according to claim 1, characterised in that in the final finished shape of said band (8) in a vulcanisation mould, the difference in stretch between the centre portion and the shoulder portions is from 0% to 2%.

3. A tyre according to claim 1, characterised in that a plurality of organic fibre cords (C) of said band (8) are embedded in a rubber and formed into a tape shape prior to winding.

4. A method for manufacturing a radial tyre comprising the steps of shaping a cylindrical tyre carcass (2) into a toroidal shape, and assembling a belt (7) and a tread (5) onto its outer surface, wherein the method comprises the steps of laminating the predetermined number of belt plies on a belt ring or a belt drum (21) to form said belt (7) and continuously winding a single organic fibre cord or a plurality of parallel organic fibre cords which are embedded in rubber in a tape-like shape onto the outer surface of the assembled belt (7) characterised by winding the single cord or plurality of cords continuously and spirally in the circumferential direction of the belt (7) from one shoulder portion to the other shoulder portion of the tyre to form a full band layer (8f) for reinforcing said belt (7), and in that the tension applied to each said organic fibre cord (C) when winding the cord (C) is changed so as to be a minimum at the crown portion of the tyre and a maximum at the shoulder portions of the tyre.

5. A method for manufacturing a radial tyre comprising the steps of shaping a cylindrical tyre carcass (2) into a toroidal shape, and assembling a belt (7) and a tread (5) onto its outer surface, wherein the method comprises the steps of laminating the predetermined number of belt plies on a belt ring or a belt drum (21) to form said belt (7) and continuously winding a single organic fibre cord or a plurality of parallel organic fibre cords which are embedded in rubber in a tape-like shape onto the outer surface of the assembled belt (7) characterised by winding the single cord or plurality of cords continuously and spirally in the circumferential direction of the belt (7) from one shoulder portion to the other shoulder portion of the tyre to form a full band layer (8f) for reinforcing said belt (7), and in that the tension applied to each said organic fibre cord (C) when winding the cord (C) is constant and the diameter of the cord winding in the wound state gradually decreases from the crown portion towards the shoulder portions of the tyre.

## Patentansprüche

1. Luftradialreifen mit einem Paar Wulstkernen (3), die in Wulstteilen des Reifens angeordnet sind, einer Karkasse (2), die zumindest eine Lage aus radial angeordneten Korden aufweist, die um die Wulstkerne (3) umgeschlagen sind, einem Laufflächenteil (5) über der Karkasse, einem Gürtel (7), der auf der radial äußeren Seite der Karkasse (2) unterhalb der Lauffläche angeordnet ist und zumindest zwei Lagen (7o, 7i) aus Metallkorden aufweist, die unter einem Winkel von 10 bis 30 Grad zur Umfangsrichtung angeordnet sind, und einem Band (8), das aus zumindest einem kontinuierlichen organischen Faserkord hergestellt ist, der spiralartig im wesentlichen parallel zur Reifenumfangsrichtung gewickelt ist, und das auf der radial äußeren Seite des Gürtels angeordnet ist, wobei das Band (8) eine Vollbandschicht (8f) umfaßt und die Vollbandschicht (8f) gebildet ist, indem ein einziger Kord oder eine Vielzahl von parallelen Korden, die in Gummi eingebettet sind, in einer streifenähnlichen Form gewickelt ist,
**dadurch gekennzeichnet,**
daß jeder Kord ein kontinuierlicher organischer Faserkord ist, der spiralartig und kontinuierlich von dem einen Schulterteil zum anderen Schulterteil des Reifens gewickelt ist, so daß die Vollbandschicht (8f) aus einer einzigen Lage des zumindest einen kontinuierlichen organischen Faserkordes besteht, und daß die Längung bei einer gegebenen Last von jedem organischen Faserkord (C) der Vollbandschicht (8f) von dem Kronenteil des Reifens auf die Schulterteile zu abnimmt.

2. Reifen nach Anspruch 1,
**dadurch gekennzeichnet,**
daß in der schließlich fertiggestellten Form des Bandes (8) in einer Vulkanisierform die Differenz der Dehnung zwischen dem Mittelteil und den Schulterteilen zwischen 0 % und 2 % liegt.

3. Reifen nach Anspruch 1,
**dadurch gekennzeichnet,**
daß eine Vielzahl von organischen Faserkorden (C) des Bandes (8) vor dem Wickeln in einen Gummi eingebettet und in einer Streifenform ausgebildet wird.

4. Verfahren zur Herstellung eines Radialreifens mit den Schritten, daß eine zylindrische Reifenkarkasse (2) in eine toroidale Form geformt wird, und daß ein Gürtel (7) und eine Lauffläche (5) auf ihrer äußeren Oberfläche aufgebaut werden, wobei das Verfahren die Schritte umfaßt, daß die vorbestimmte Anzahl von Gürtellagen auf einem Gürtelring oder einer Gürteltrommel (21) laminiert wird, um den Gürtel (7) zu bilden, und daß ein einziger organischer Faserkord oder eine Vielzahl von parallelen organischen Faserkorden, die in Gummi eingebettet sind, in einer streifenähnlichen Form auf die äußere Oberfläche des aufgebauten Gürtels (7) gewickelt wird,
**dadurch gekennzeichnet,**
daß der einzige Kord oder die Vielzahl von Korden kontinuierlich und spiralartig in der Umfangsrichtung des Gürtels (7) von dem einen Schulterteil zum anderen Schulterteil des Reifens gewickelt wird, um eine Vollbandschicht (8f) zu bilden und somit den Gürtel (7) zu verstärken, und daß die an jeden organischen Faserkord (C) angelegte Spannung, wenn der Kord (C) gewickelt wird, so geändert wird, daß sie an dem Kronenteil des Reifens bei einem Minimum und an den Schulterteilen des Reifens bei einem Maximum ist.

5. Verfahren zur Herstellung eines Radialreifens mit den Schritten, daß eine zylindrische Reifenkarkasse (2) in eine toroidale Form geformt wird, und daß ein Gürtel (7) und eine Lauffläche (5) auf ihre äußere Oberfläche aufgebaut werden, wobei das Verfahren die Schritte umfaßt, daß die vorbestimmte Anzahl von Gürtellagen auf einem Gürtelring oder einer Gürteltrommel (21) laminiert wird, um den Gürtel (7) zu bilden, und daß ein einziger organischer Faserkord oder eine Vielzahl von parallelen organischen Faserkorden, die in Gummi eingebettet sind, kontinuierlich in einer streifenähnlichen Form auf die äußere Oberfläche des aufgebauten Gürtels (7) gewickelt wird,
**dadurch gekennzeichnet,**
daß der einzige Kord oder die Vielzahl von Korden kontinuierlich und spiralartig in der Umfangsrichtung des Gürtels (7) von dem einen Schulterteil zum anderen Schulterteil des Reifens gewickelt wird, um eine Vollbandschicht (8f) zu bilden und somit den Gürtel (7) zu verstärken, und daß die an jeden organischen Faserkord (C) angelegte Spannung, wenn der Kord (C) gewickelt wird, konstant ist, und daß der Durchmesser der Kordwicklung in dem gewickelten Zustand allmählich von dem Kronenteil auf die Schulterteile des Reifens zu abnimmt.

## Revendications

1. Pneumatique à carcasse radiale, comprenant une paire de tringles (3) placées dans des parties de talon du pneumatique, une carcasse (2) ayant au moins une nappe de câblés disposée radialement et repliée autour des tringles (3), une partie de bande de roulement (5) placée sur la carcasse, une ceinture (7) placée d'un côté radialement externe de la carcasse (2) sous la bande de roulement et ayant au moins deux nappes (7o, 7i) de câblés métalliques disposés suivant un angle de 10 à 30° par rapport à la direction circonférentielle, et un bandage (8) formé d'au moins un câblé continu de fibres organiques enroulées en spirale en direction pratiquement parallèle à la direction circonférentielle du pneumatique et placées du côté radialement externe de la ceinture, le bandage (8) comprenant une couche complète (8f) de bandage, cette couche complète (8f) de bandage étant formée par enroulement d'un câblé unique ou de plusieurs câblés parallèles enrobés dans du caoutchouc à une configuration analogue à un ruban, caractérisé en ce que chaque câblé est un câblé continu de fibres organiques, enroulé en spirale et de façon continue d'une première partie d'épaulement à l'autre partie d'épaulement du pneumatique afin que la couche complète (8f) de bandage soit constituée d'une seule couche d'au moins un câblé continu de fibres organiques, et l'allongement, pour une charge donnée, de chaque câblé de fibres organiques (C) de la couche complète (8f) de bandage diminue de la partie centrale du pneumatique vers les parties d'épaulement.

2. Pneumatique selon la revendication 1, caractérisé en ce que, à la configuration finale terminée du bandage (8) dans un moule de vulcanisation, la différence d'étirage entre la partie centrale et la partie d'épaulement est comprise entre 0 et 2 %.

3. Pneumatique selon la revendication 1, caractérisé en ce que plusieurs câblés de fibres organiques (C) du bandage (8) sont enrobés dans un caoutchouc et mis sous forme d'un ruban avant l'enroulement.

4. Procédé de fabrication d'un pneumatique à carcasse radiale, comprenant les étapes suivantes : la mise d'une carcasse cylindrique (2) de pneumatique à une forme toroïdale, et l'assemblage d'une ceinture (7) et d'une bande de roulement (5) à sa surface externe, le procédé comprenant les étapes suivantes : la stratification du nombre prédéterminé de nappes de ceinture sur un anneau ou tambour (21) de ceinture pour la formation de la ceinture (7) et l'enroulement de façon continue d'un câblé unique de fibres organiques ou de plusieurs câblés parallèles de fibres organiques qui sont enrobés dans du caoutchouc avec une configuration de ruban, à la surface externe de la ceinture assemblée (7), caractérisé par l'enroulement du câblé unique ou des câblés de façon continue et spiralée dans la direction circonférentielle de la ceinture (7) d'une partie d'épaulement à l'autre partie d'épaulement du pneumatique, pour la formation d'une couche complète (8f) de bandage destinée à armer la ceinture (7), et en ce que la tension appliquée à chaque câblé de fibres organiques (C) lors de l'enroulement du câblé (C) est modifiée afin qu'elle soit minimale dans la partie centrale du pneumatique et maximale aux parties d'épaulement du pneumatique.

5. Procédé de fabrication d'un pneumatique à carcasse radiale, comprenant les étapes suivantes : la mise d'une carcasse cylindrique (2) de pneumatique à une forme toroïdale, et l'assemblage d'une ceinture (7) et d'une bande de roulement (5) à sa surface externe, le procédé comprenant les étapes suivantes : la stratification du nombre prédéterminé de nappes de ceinture sur un anneau ou tambour (21) de ceinture pour la mise en forme de la ceinture (7), et l'enroulement continu d'un câblé unique de fibres organiques ou de plusieurs câblés parallèles de fibres organiques qui sont enrobés dans un caoutchouc avec une configuration de ruban, à la surface externe de la ceinture assemblée (7), caractérisé par l'enroulement du câblé unique ou des câblés de façon continue en spirale dans la direction circonférentielle de la ceinture (7) d'une partie d'épaulement à l'autre partie d'épaulement du pneumatique pour la formation d'une couche complète (8f) de bandage destinée à armer la ceinture (7), et en ce que la tension appliquée à chaque câblé de fibres organiques (C) lors de l'enroulement du câblé (C) est constante et le diamètre d'enroulement du câblé à l'état enroulé diminue progressivement de la partie centrale vers les parties d'épaulement du pneumatique.
